# FASCICULE DE BREVET EUROPEEN

(11) **EP 0 426 590 B1**
(45) Date de publication et mention de la délivrance du brevet: **09.08.1995**
(21) Numéro de dépôt: 90460039.2
(22) Date de dépôt: 30.10.1990
(51) Int. Cl.: E04B 9/02, A01K 1/00

(54) **Installation pour la diffusion d'air dans un bâtiment, notamment d'élevage**
Für die Luftdiffusion in einem Gebäude bestimmte Einrichtung, insbesondere in der Tierzucht
Layoutfor air diffusion in a building especially in livestock breeding

(30) Priorité: 30.10.1989 FR 8914470
(43) Date de publication de la demande: 08.05.1991
(73) Titulaire: Rose, Michel, F-22330 Saint Goueno (FR); Rose, Loic, F-22330 Saint Goueno (FR)
(72) Inventeur: Rose, Michel, F-22330 Saint Goueno (FR); Rose, Loic, F-22330 Saint Goueno (FR)
(74) Mandataire: Schrimpf, Robert

(56) Documents cités:
- FR-A- 1 434 093
- US-A- 2 996 138

## Description

La présente invention concerne une installation destinée à la diffusion d'air dans un bâtiment, notamment dans un bâtiment d'élevage.

Il est connu d'équiper les salles de bâtiments, en particulier les bâtiments d'élevage, d'un faux plafond formé de panneaux, ceux-ci présentant une multitude d'ouvertures traversant les panneaux par leurs grandes faces (d'une grande face à l'autre grande face). Ces panneaux permettent la diffusion d'air renouvelé, de l'extérieur des bâtiments vers l'intérieur des salles où se trouvent les animaux. Ces ouvertures présentent le plus souvent une forme cylindrique ou tronconique et ont un diamètre d'entrée (diamètre de l'ouverture du côté de l'entrée du flux d'air) assez important, de 2 centimètres ou plus. Des exemples de panneaux présentant des ouvertures de ce type sont décrits dans les documents FR-A-1 434 093 et US-2 996 138, bien qu'il n'y soit pas fait mention d'une application aux bâtiments d'élevage. Il résulte de la forme de ces ouvertures que l'air, qui se trouve à une température inférieure à la température de la salle dans laquelle il arrive, est canalisé dans les ouvertures et diffusé sous forme de jets à vitesse élevée, directement vers les animaux.

On comprend aisément que ce phénomène peut avoir des effets néfastes pour les animaux, et provoquer des maladies (refroidissement), un retard de croissance, ou même du stress.

La présente invention a pour but de remédier à ces inconvénients.

L'installation qui fait l'objet de l'invention comprend un faux plafond constitué d'un assemblage de panneaux traverses par une multitude d'ouvertures, ainsi qu'un ventilateur apte à aspirer de l'air de l'extérieur vers l'intérieur du bâtiment en le faisant passer de haut en bas à travers lesdites ouvertures.

Les inconvénients mentionnés plus haut sont évités grâce au fait que chaque ouverture est formée, dans le sens de passage de l'air, d'un trou qui se prolonge par une cavité en forme de bol, débouchant sur la face inférieure du panneau.

Selon d'autres caractéristiques avantageuses mais non limitatives :
- ladite ouverture définit une forme de révolution dont l'axe est sensiblement perpendiculaire aux grandes faces du panneau ;
- la cavité en forme de bol possède une paroi approximativement hémisphérique ;
- la cavité en forme de bol se raccorde à la grande face du panneau sur laquelle elle débouche par une zone arrondie.

D'autres caractéristiques et avantages de la présente invention apparaîtront de la description et des dessins annexés qui en représentent un mode de réalisation préférentiel.

Sur ces dessins :
- la figure 1 est une vue schématique en coupe transversale d'un bâtiment d'élevage de porcs équipé d'une installation conforme à l'art antérieur ;
- la figure 2 est une vue analogue à la figure 1, le bâtiment étant équipé d'une installation conforme à l'invention ;
- la figure 3 est une vue en coupe transversale d'un panneau constitutif du faux-plafond de cette installation ;
- la figure 4 est une vue de dessous d'une partie du panneau ;
- la figure 5 est une vue de détail en coupe transversale d'une ouverture du panneau.

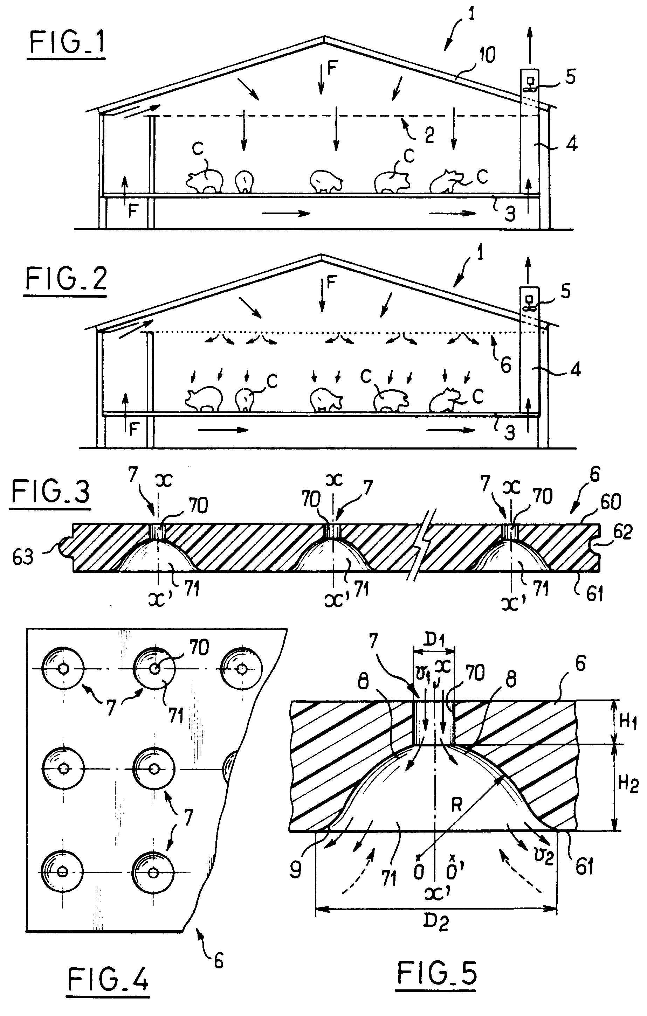

Le bâtiment d'élevage 1 représenté à la figure 1, dans lequel se trouvent des porcs C, est équipé d'un faux plafond 2 placé à une certaine distance du toit 10 du bâtiment. Celui-ci est ventilé par dépression, c'est-à-dire qu'il comporte un ventilateur extracteur 5 placé dans une colonne d'évacuation d'air 4. Le ventilateur, lorsqu'il est en fonctionnement, tend à provoquer l'afflux d'air, de l'extérieur vers l'intérieur du bâtiment, selon le parcours illustré par les flèches F. Ainsi que cela a été évoqué plus haut, l'air traverse les ouvertures du plafond 2 et est diffusé sous forme de jets, directement vers les porcs C. Cet air traverse le caillebotis 3 sur lequel se trouvent les porcs et remonte à l'intérieur de la colonne 4 pour s'échapper en dehors du bâtiment. Des moyens d'asservissement sont prévus qui font varier la vitesse de rotation du ventilateur extracteur 5 en fonction de la température de l'air à l'intérieur du bâtiment ; ainsi lorsque cet air a une température trop élevée, la vitesse de ce dernier augmente. Toutefois, du fait que les ouvertures du plafond présentent un diamètre relativement important, l'air (froid) situé au-dessus du faux plafond a tendance à pénétrer naturellement à l'intérieur de la salle où se trouvent les porcs de sorte que l'asservissement en température est perturbé, et que le ventilateur 5 ne remplit pas correctement sa fonction ; en effet, la température de l'air à l'intérieur du bâtiment se trouve naturellement abaissée pratiquement sans l'intervention du ventilateur. Ce phénomène a pour conséquence que des vapeurs nocives, par exemple générées par les déjections des animaux, ne sont plus correctement extraites par le ventilateur mais remontent à l'intérieur du bâtiment, vers les animaux. Bien entendu, ces inconvénients s'ajoutent à ceux décrits plus haut.

Le bâtiment d'élevage 1 représenté à la figure 2 est équipé d'une installation conforme à l'invention, dont les panneaux 6 constituent un faux plafond.

Chaque panneau 6, qui est par exemple réalisé en polystyrène extrudé, présente un contour de forme rectangulaire. Ses deux petits côtés présentent l'un une rainure 62, et l'autre une languette 63, qui permettent l'assemblage des panneaux les uns aux autres par emboîtement comme cela est bien connu.

Le panneau présente une multitude d'ouvertures 7 qui font communiquer ses grandes faces 60 et 61. Chaque ouverture 7 est formée, dans le sens de passage de l'air, c'est-à-dire de haut en bas sur les figures 3 et 5, d'une perforation 70 qui se prolonge par une cavité 71 en forme de bol. Cette cavité débouche sur la grande face inférieure 61 du panneau.

La perforation 70 est sensiblement cylindrique ; ainsi l'ouverture 7 définit une forme de révolution centrée sur un axe xx', perpendiculaire aux grandes faces 60 et 61 du panneau, c'est-à-dire vertical.

Dans le mode de réalisation représenté, et visible notamment à la figure 5, la paroi de la cavité 71 a une forme approximativement hémisphérique. En fait il s'agit d'une paroi de forme ovoïde, dont le rayon de courbure R est pratiquement constant. Le centre de courbure de la paroi est légèrement décalé par rapport à l'axe xx' ; il est situé au-delà de cet axe. A la figure 5 on a désigné sous la référence O le centre de courbure de la section de paroi située à droite de la figure, et par O' celui de la section de paroi située à gauche. Le raccordement entre la cavité 71 et la grande face 61 du panneau se fait par une zone arrondie 9.

L'écoulement de l'air à travers une telle ouverture s'effectue de la manière suivante. L'air frais arrive de haut en bas sous la forme d'un flux dans la perforation 70 à une vitesse v1 élevée, par exemple de l'ordre de 5 mètres par seconde. Le flux de l'air est matérialisé sur la figure 5 par des flèches en traits gras. A l'entrée de la cavité 71, l'air a tendance à s'écouler en se rapprochant de la paroi de la cavité. A proximité immédiate de cette paroi, dans la zone repérée par la référence numérique 8, se crée une dépression qui tend à appliquer le flux d'air contre la paroi de la cavité 71 et à le faire tourbillonner le long de celle-ci. Ce tourbillonnement provoque le ralentissement de l'air de sorte qu'il s'évacue à la base du panneau 6 à une vitesse v2 de l'ordre de 2,5 à 3 m/s. Le phénomène de tourbillonnement de l'air et de ralentissement de celui-ci est accentué par les remontées d'air chaud présent dans le bâtiment, celles-ci étant matérialisées par des flèches en traits pointillés à la figure 5.

A la sortie de la cavité 71, l'air tend à s'écouler par la périphérie de l'ouverture selon une direction oblique, correspondant au galbe de la cavité, et ainsi n'est pas dirigé directement vers les animaux (voir figure 2). La présence de la zone de raccordement arrondie 9 accentue encore l'orientation du flux d'air selon une composante horizontale.

Bien entendu, la vitesse de l'air se trouve encore abaissée naturellement lorsqu'elle arrive sur les animaux ; elle est alors par exemple de l'ordre de 0,1 à 0,5 mètre par seconde.

On donne ci-après, à simple titre indicatif certaines caractéristiques dimensionnelles du panneau 6 :
- hauteur H1 de la perforation 70 : 5 à 15 mm ;
- épaisseur (H1 + H2) du panneau : 30 mm ;
- diamètre D1 de la perforation 70 : 5 à 10 mm ;
- diamètre D2 de la cavité 71 au niveau de la face 61 : 60 mm ;
- rayon de courbure R de la paroi de cavité 71 : 40 mm.

Les ouvertures 7 sont régulièrement réparties sur le panneau, comme le montre la figure 4. Toutefois, leur nombre par unité de surface dépend de l'application que l'on veut faire du panneau, en particulier de l'espèce d'animaux présents dans le bâtiment d'élevage et/ou de leur stade de développement. Ainsi, s'il s'agit de porcs en phase d'engraissement, on prévoit environ 70 à 75 ouvertures par mètre carré de panneau.

Il est intéressant de noter que du fait que les perforations 70 présentent un petit diamètre, l'air frais a peu tendance à rentrer naturellement par gravité à l'intérieur de la salle où se trouvent les animaux. Pour provoquer l'aération de la salle, le ventilateur doit fonctionner à vitesse élevée. Il remplit alors sa fonction d'extraction, et débarrasse la salle des vapeurs nocives évoquées plus haut.

Bien entendu, les panneaux 6 peuvent également être utilisés dans des bâtiments d'élevage ventilés par surpression, c'est-à-dire ceux qui comportent un ventilateur placé non loin du toit, lequel force l'air à rentrer dans la salle où se trouvent les animaux.

Selon une variante de réalisation, les petits côtés des panneaux sont plans, et leur assemblage se fait au moyen de profilés de section en forme de "H", par exemple en matière plastique.

Le panneau de faux-plafond constitutif de l'installation faisant l'objet de l'invention n'est pas nécessairement destiné à la diffusion d'air dans les bâtiments d'élevage. Il peut par exemple être utilisé pour la diffusion d'air dans un local où une atmosphère contrôlée est souhaitée. A titre d'exemple on peut citer le cas des enceintes de mûrissement de fromages où l'on a besoin d'une distribution d'air homogène et indirecte (pas de soufflage direct sur les produits). Dans cette application, les panneaux sont disposés verticalement de manière à former une paroi (cloison) perforée à travers laquelle l'air est diffusé. D'autres applications sont possibles, par exemple dans le domaine du séchage et du fumage de produits de charcuterie, de l'incubation d'oeufs, des cultures de plantes et des micro-organismes, etc.

## Revendications

1. Installation pour la diffusion d'air dans un bâtiment (1), notamment d'élevage, qui comprend :
- un faux plafond constitué d'un assemblage de panneaux (6) traversés par une multitude d'ouvertures (7) ;
- un ventilateur (5) apte à aspirer de l'air de l'extérieur vers l'intérieur du bâtiment (1) en le faisant passer de haut en bas à travers lesdites ouvertures (7) ;
caractérisée par le fait que chaque ouverture (7) est formée, dans le sens de passage de l'air, d'un trou (70) qui se prolonge par une cavité en forme de bol (71), débouchant sur la face inférieure (61) du panneau (6).

2. Installation selon la revendication 1, caractérisée en ce que chaque ouverture (7) définit une forme de révolution dont l'axe (xx') est sensiblement perpendiculaire aux grandes faces (60, 61) du panneau.

3. Installation selon l'une des revendications 1 ou 2, caractérisée en ce que la cavité (71) en forme de bol possède une paroi approximativement hémisphérique.

4. Installation selon l'une des revendications 1 à 3, caractérisée en ce que chaque cavité (71) en forme de bol se raccorde à la face inférieure (61) du panneau par une zone arrondie (9).

## Claims

1. Installation for diffusing air in a building (1), especially a rearing building, which comprises:
- a false ceiling consisting of an assembly of panels (6) through which pass a multitude of openings (7);
- a fan (5) capable of sucking in air from outside into the building (1), forcing it to pass from the top down through the said openings (7);
characterized in that each opening (7) is formed, in the direction in which the air passes, by a hole (70) which is extended by a bowl-shaped cavity (71) emerging on the lower face (61) of the panel (6).

2. Installation according to Claim 1, characterized in that each opening (7) defines a shape of revolution, the axis (xx') of which is substantially perpendicular to the large faces (60, 61) of the panel.

3. Installation according to one of Claims 1 and 2, characterized in that the bowl-shaped cavity (71) possesses an approximately hemispherical wall.

4. Installation according to one of Claims 1 to 3, characterized in that each bowl-shaped cavity (71) is connected to the lower face (61) of the panel by a rounded region (9).

## Patentansprüche

1. Einrichtung für die Luftdiffusion in einem Gebäude (1), insbesondere der Tierzucht, mit:
- einer Zwischendecke, die aus einem Verband von Paneelen (6), welche von einer Vielzahl von Öffnungen (7) durchbrochen sind, gebildet ist;
- einem Ventilator (5), der geeignet ist, Luft von außen ins Innere des Gebäudes (1) anzusaugen, wodurch sie von oben nach unten durch die Öffnungen (7) strömt:
dadurch gekennzeichnet, daß jede Öffnung (7) in Strömungsrichtung der Luft als Loch (70) ausgebildet ist, welches sich durch eine Aushöhlung in Form einer Schale (71) erweitert, die in die Unterseite (61) des Paneels (6) mündet.

2. Einrichtung nach Anspruch 1, dadurch gekennzeichnet, daß jede Öffnung (7) eine Drehform bildet, deren Achse (xx') zu den Flachseiten (60, 61) des Paneels im wesentlichen rechtwinklig ist.

3. Einrichtung nach einem der Ansprüche 1 oder 2, dadurch gekennzeichnet, daß die Aushöhlung (71) in Form einer Schale einen annähernd halbkugelförmigen Mantel aufweist.

4. Einrichtung nach einem der Ansprüche 1 bis 3, dadurch gekennzeichnet, daß jede Aushöhlung (71) in Form einer Schale sich der Außenfläche (61) des Paneels durch eine Abrundungszone (9) anpaßt.
